# EUROPEAN PATENT APPLICATION

(11) **EP 2 611 191 A1**
(43) Date of publication of application: **03.07.2013**
(21) Application number: 12196468.8
(22) Date of filing: 11.12.2012
(51) Int. Cl.: H04N 21/418, H04N 21/4223, H04N 21/458, H04N 21/81, H04N 21/45, H04N 21/485, H04N 21/442

(54) **Display system including a display apparatus and an upgrade apparatus, and method of controlling the same.**

(30) Priority: 28.12.2011 KR 20110144953; 30.12.2011 KR 20110147341; 09.04.2012 KR 20120036579
(71) Applicant: Samsung Electronics Co., Ltd, Gyeonggi-do 443-742 (KR)
(72) Inventor: Lee, Kyu-heon, Seoul (KR); Na, Hong-ju, Gyeonggi-do (KR); Park, Kil-soo, Gyeonggi-do (KR)
(74) Representative: Brandon, Paul Laurence

(57) **Abstract**

A display apparatus including and a display unit are provided. The display apparatus includes an image processing unit processing an image signal received from an image source according to a preset image processing process in order to display the image on the display unit; a connection unit connected to an upgrade apparatus provided to upgrade the image processing process; a storage unit storing operating time information and displaying the information on the display unit; and a controller displaying a menu image on the display unit, the menu image being provided to adjust at least one preset item associated with quality of the image displayed on the display unit, and transmitting the operating time information on the display unit to the upgrade apparatus to change a set value of the item of the menu image corresponding to the operating time information on the display unit stored in the storage unit.

## Description

### BACKGROUND

### Field

Methods and apparatuses consistent with the exemplary embodiments relate to a display apparatus which processes an image signal provided from an image source according to a preset image processing process in order to display an image; an upgrade apparatus upgrading the display apparatus; a display system including the display apparatus and the upgrade apparatus, and a method of controlling the same. More particularly, the exemplary embodiments relate to a display apparatus of which an existing operation is upgraded as an upgrade apparatus is connected to the display apparatus, an upgrade apparatus, a display system, and a method of controlling the same.

### Description of the Related Art

A display apparatus is a device which processes image signals/image data transmitted from various external image sources and autonomously stored in order to present images on its own display panel. Available display apparatuses for general users may include a TV and a monitor. For example, a display apparatus implemented as a TV processes broadcast signals transmitted from the outside according to various types of image processing, e.g., decoding and scaling, in order to offer images of broadcast channels desired by users.

The display apparatus has an embedded image processing board configured as a circuit which includes various kinds of chip sets and a memory to conduct such image processing. However, in view of various factors, such as technology development and diverse demands of users, as well as improvement in convenience to users, there is increasingly required a display apparatus having advanced capability. The functions of the display apparatus can be improved and upgraded in terms of hardware and software.

To upgrade the hardware of the display apparatus, the whole or at least part of the image processing board embedded in the display apparatus may need replacing, which is not easy in view of manufacture and use. Also, to run advanced software, hardware should be designed which corresponds to the software. In the end, a user may need to purchase a new upgraded display apparatus.

### SUMMARY

Accordingly, one or more exemplary embodiments provide a display apparatus including a display; an image processor which processes an image signal received from an image source according to a preset image processing process in order to display the image; a connection unit connected to an upgrade apparatus which upgrades the image processing process; a storage unit which stores operating time information; and a controller which displays a menu image on the display, the menu image being provided to adjust at least one preset item associated with the quality of the displayed image, and the controller transmitting the operating time information to the upgrade apparatus so as to change a set value of the item of the menu image which corresponds to the operating time information on the display unit to enhance the image through the upgrade apparatus.

The display may further include a liquid crystal display (LCD) panel and the operating time information on the display comprises information relating to usage time of the panel.

In an exemplary embodiment, the controller updates in the storage unit the operating time information displayed on the display stored with the passing of the usage time of the panel.

The controller controls the display to display a comparison image in order to compare the quality of an image before the change of the set value of the item and the quality of an image after change of the set value of the item. In addition, the controller determines whether to change the set value of the item based on a selection input relating to the comparison image.

The item of the menu image comprises at least one of brightness, noise, sharpness, a gray scale of a low grayscale area, contrast, color, gamma, and white color temperature.

The upgrade apparatus performs a second process which corresponds to a first process which is at least part of the image processing process, and the controller controls the second process to be performed through the upgrade apparatus, instead of the first process by the image processor, when the upgrade apparatus is connected to the connection unit.

An exemplary embodiment may include an upgrade apparatus for a display apparatus having a connection unit connected to the display apparatus which processes an image signal received from an image source according to a preset image processing process in order to display an image; an image processor which processes the image signal with the upgraded image processing process when the display apparatus is connected to the connection unit; and a controller displaying a menu image on the display apparatus when upgrading the display apparatus connected to the connection unit, the menu image being provided to adjust at least one preset item associated with quality of the image displayed on a display of the display apparatus, and changing and displaying a set value of the item of the menu image which corresponds to operating time information on the display, when the operating time information on the display is received from the display apparatus.

The display comprises a liquid crystal display (LCD) panel and the operating time information on the display comprises information relating to usage time of the panel.

The controller controls the display apparatus to display a comparison image to compare the quality of an image before change of the set value of the item and the quality of an image after change of the set value of the item. The controller determines whether to change the set value of the item based on a selection input relating to the comparison image.

The item of the menu image comprises at least one of brightness, noise, sharpness, a gray scale of a low grayscale area, contrast, color, gamma, and white color temperature.

The image processor performs a second process which corresponds to a first process which is at least part of the image processing process, and the controller controls the second process to be performed on the display apparatus by the image processor instead of the first process, when the display apparatus is connected to the connection unit.

An exemplary embodiment may include a method of controlling a display apparatus, comprising a display and an image processor which processing an image signal received from an image source according to a preset image processing process in order to display an image on the display, the method of controlling the display apparatus including: connecting to the display apparatus an upgrade apparatus which is provided to upgrade the image processing process; determining operating time information relating to an image on the display; and transmitting the operating time information on the display to the upgrade apparatus so as to change a set value of at least one preset item of a menu image which corresponds to the operating time information on the display to upgrade, through the upgrade apparatus, the menu image being provided in order to adjust the preset item associated with quality of the image displayed on the display.

A method of controlling an upgrade apparatus of a display apparatus, the method of controlling an upgrade apparatus of a display apparatus may include: providing to the display apparatus an image signal received from an image source which processes an image signal according to a preset image processing process, in order to display the image signal receiving from the display apparatus operating time information which relates to a display of the display apparatus; and displaying and changing a set value of at least one preset item of a menu image which corresponds to the operating time information on the display when upgrading the image processing process of the display apparatus, the menu image being provided to adjust the item associated with the quality of the image displayed on the display.

An exemplary embodiment may include display system having a display apparatus comprising a display and an image processor which processes an image signal received from an image source according to a preset image processing process, in order to display an image on the display; and an upgrade apparatus connected to the display apparatus to upgrade the image processing process and for processing the image signal according to the upgrade image processing process, wherein a set value of at least one preset item of a menu image is displayed and changed according to operating time information on the display unit in upgrading the display apparatus by the upgrade apparatus, the menu image being provided to adjust the item associated with the quality of the image displayed on the display.

A display apparatus may include: a display; an image processor which processes an image signal received from an image source according to a preset image processing process in order to display an image on the display; a connection unit to which an upgrade apparatus provided to upgrade the image processing is connected; a camera which captures surroundings of the display apparatus; and a controller which transmits an image captured by the camera to the upgrade apparatus; wherein the upgrade apparatus analyzes the surroundings of the display apparatus based on the captured image and adjusts the image processing process based on analysis information on the surroundings of the display apparatus received from the upgrade apparatus.

The analysis information may include at least one of a RGB ratio, a histogram, and brightness of the captured image. The adjustment of the image processing process includes adjustment of at least one of brightness, light and shade, color density, definition, and a color level of the image displayed on the display.

When ambient light of the surroundings is determined from the analysis information to be relatively bright, the controller increases the brightness of the image displayed on the display.

The upgrade apparatus performs a second process which corresponds to a first process which is at least part of the image processing process, and the controller controls the second process to be performed by the upgrade apparatus, instead of the first process by the image processor, when the upgrade apparatus is connected to the connection unit.

An upgrade apparatus of a display apparatus may include: a connection unit connected to the display apparatus which processes an image signal received from an image source according to a preset image processing process in order to display an image; an image processor which processes the image signal with the upgraded image processing process when the display apparatus is connected to the connection unit; and a controller which analyzes surroundings of the display apparatus based on an image captured by a camera of the display apparatus when receiving the captured image through the connection unit, and controlling the image processing process to be adjusted based on analysis information relating to the surroundings.

The analysis information includes at least one of a RGB ratio, a histogram, and brightness of the captured image.

The adjustment of the image processing process includes adjustment of at least one of brightness, light and shade, color density, definition, and a color level of the image displayed on the display apparatus.

When ambient light of the surroundings is determined to be relatively bright from the analysis information, the controller increases the brightness of the image displayed on the display apparatus.

The image processor performs a second process which corresponds to a first process which is at least part of the image processing process, and the controller controls the second process to be performed by the image processor , instead of the first process by the display, when the display is connected to the connection unit.

A method of controlling a display apparatus includes a display and an image processor which processes an image signal received from an image source according to a preset image processing process in order to display an image on the display, the method of controlling a display apparatus including: connecting an upgrade apparatus provided to upgrade the image processing process to the display; capturing an image of surroundings of the display and transmitting the captured image to the upgrade apparatus so that the upgrade apparatus analyzes the surroundings of the display based on the captured image; and adjusting the image processing process based on analysis information on the surroundings of the display received from the upgrade apparatus.

A method of controlling an upgrade apparatus of a display, the method of controlling an upgrade apparatus of a display includes: processing an image signal received from an image source according to a preset image processing process and providing the processed image to the display in order to display the processed image; receiving from the display an image captured by a camera of the display ; and analyzing surroundings of the display based on the received image and adjusting the image processing process based on analysis information relating to the surroundings.

A display system includes: a display apparatus including a display, an image processor which processes an image signal received from an image source according to a preset image processing process in order to display an image on the display, a camera capturing an image of the surroundings; and an upgrade apparatus connected to the display to upgrade the image processing process; wherein the upgrade apparatus processes the image signal according to the upgraded image processing process, wherein a captured image captured by the camera is transmitted from the display to the upgrade apparatus so that the upgrade apparatus analyzes the surroundings of the display based on the captured image, and the image processing process is adjusted based on analysis information relating to the surroundings of the display by the upgrade apparatus.

An exemplary embodiment may further include a display system for providing enhanced processing capabilities to a display apparatus, including: a display apparatus comprising a display and an image processor which processes an image signal received from an image source, and an upgrade apparatus connected to the display apparatus to upgrade image processing processes, wherein a set value of a menu image is displayed and changed according to operating time information to change the processed image, the menu image being provided to adjust an item associated with the quality of the image displayed on the display.

The received image is processed according to a preset image processing process, in order to display the image on the display of the display apparatus.

The upgrade apparatus controls the display in order to display a comparison image to compare the quality of an image before the change of the set value of the item and the quality of an image after change of the set value of the item.

### BRIEF DESCRIPTION OF THE DRAWINGS

The above and/or other aspects of the inventive concept will become apparent and more readily appreciated from the following description of the exemplary embodiments, taken in conjunction with the accompanying drawings, in which:

FIG. 1 illustrates a display system according to a first exemplary embodiment.

FIG. 2 is a block diagram illustrating a configuration of the display system of FIG. 1.

FIGs. 3 and 4 illustrate a method of an upgrade apparatus upgrading an image processing process of a display apparatus in the display system of FIG. 1.

FIG. 5 is a flowchart illustrating a process of updating image quality adjustment software of the display apparatus of FIG. 1.

FIG. 6 is a flowchart illustrating a method of upgrading the display apparatus with the upgrade apparatus of FIG. 1.

FIG. 7 illustrates a display apparatus according to a second exemplary embodiment.

FIG. 8 is a block diagram illustrating configurations of a display module and a signal processing module of FIG. 7.

FIG. 9 is a flowchart illustrating a process of upgrading or replacing the signal processing module of the display apparatus of FIG. 8.

FIG. 10 illustrates a display apparatus according to a third exemplary embodiment.

FIG. 11 is a flowchart illustrating a method of controlling the display apparatus of FIG. 10.

FIG. 12 is a flowchart illustrating a method of controlling the upgrade apparatus of FIG. 10.

### DETAILED DESCRIPTION OF EXEMPLARY EMBODIMENTS

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

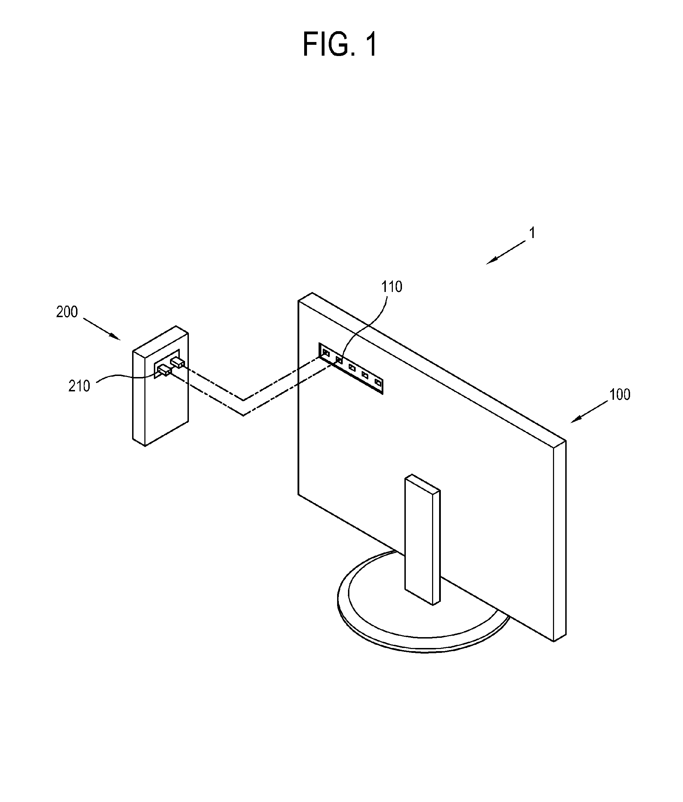

FIG. 1 illustrates a display system 1 according to a first exemplary embodiment.

As shown in FIG. 1, the display system 1 according to an exemplary embodiment includes a display apparatus 100 which processes an image signal provided from an external image source (not shown) according to a preset image processing process and displaying an image based on the image signal and an upgrade apparatus 200 which is for upgrading hardware/software of the display apparatus 100.

In the system 1 of the exemplary embodiment, the display apparatus 100 is configured as a TV which displays broadcast images based on broadcast signals/broadcast information/broadcast data received from a transmitter of a broadcast station. However, the display apparatus 100 may be configured as various types of devices which are capable of displaying images, without being limited to a TV.

The display apparatus 100 may display any image, without being limited to broadcast images. For example, the display apparatus 100 may display images, such as videos, still images, applications, on-screen display (OSD) based on signals/data received from various types of image sources (not shown), and graphic user interface (GUI) for controlling various operations.

The upgrade apparatus 200 is connected to the display apparatus 100 for communication therewith. The upgrade apparatus 200 upgrades existing hardware/software of the connected display apparatus 100 and enables an image signal to be processed by the upgraded hardware/software of the display apparatus 100, thereby displaying an image with improved quality.

The upgrade apparatus 200 may be connected to the display apparatus 100 via a cable or may be connected wirelessly. In the exemplary embodiment, the upgrade apparatus 200 is connected to the display apparatus 100 via a cable, thereby enabling transmission and reception of data/information/signals/power between the upgrade apparatus 200 and the display apparatus 100. The display apparatus 100 and the upgrade apparatus 200 respectively include connectors/terminals 110 and 210 for physical/electrical connection to each other.

Alternatively, the upgrade apparatus 200 may be wirelessly connected to the display apparatus 100. In this case, the upgrade apparatus 200 is supplied with operating power from a separate external power source or battery. However, the exemplary embodiment is described with reference to a case where the upgrade apparatus 200 is connected to the display apparatus 100 via a cable.

The display apparatus 100 may solely process an image signal received from the outside according to a preset image processing process and may display an image based on the image signal. In the exemplary embodiment, however, as the display apparatus 100 and the upgrade apparatus 200 are connected, hardware/software of the display system 1 performing the image processing process is upgraded, thereby providing a user with an image with relatively improved quality.

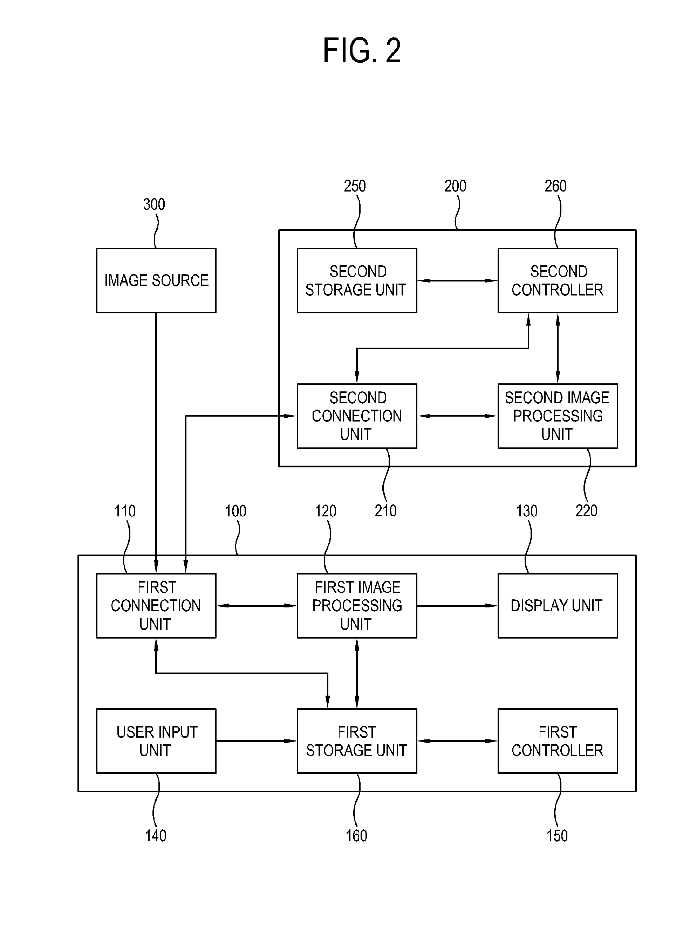

Hereinafter, configurations of the display apparatus 100 and the upgrade apparatus 200 will be described with reference to FIG. 2. FIG. 2 is a block diagram illustrating the configurations of the display apparatus 100 and the upgrade apparatus 200 which constitutes display system 1.

As shown in FIG. 2, the display apparatus 100 includes a first connection unit 110 to which at least one image source 300 is connected; a first image processing unit 120 which processes an image signal received from the image source 300 through the first connection unit 110; a display unit 130 which displays an image based on an image signal processed by the first image processing unit 120; a user input unit 140 which outputs a preset command according to manipulation by a user; a first storage unit 150 which stores unlimited data/information, and a first controller 160 which generally controls operations of components of the display apparatus 100.

The first connection unit 110 transmits an image signal received from the at least one image source 300 to the first image processing unit 120 and is configured as various types which correspond to standards of received image signals or types of the image source 300 and the display apparatus 100. For example, the first connection unit 110 may receive signals/data in accordance with the high definition multimedia interface (HDMI), USB, and component standards and include a plurality of connection terminals (not shown) which correspond to the respective standards. Various external devices including the image source 300 may be connected to the connection terminals, thus enabling communication via the first connection unit 110.

That is, any external device capable of transmitting and receiving signals/data to and from the display apparatus 100 through the first connection unit 110 may be connected to the first connection unit 110, without being limited to the image source 300. In the exemplary embodiment, the upgrade apparatus 200 may be connected to the first connection unit 110.

An external device may be connected to the first connection unit 110 in any mode among a local mode or a network mode. In the exemplary embodiment, the first connection unit 110 is connected to a preset communication protocol-based network for communication therewith, enabling two-way communication with a server 310 through the network.

The first image processing unit 120 performs various preset image processing processes on an image signal received from the first connection unit 110. The first image processing unit 120 outputs a processed image signal to the display unit 130, so that an image based on the image signal is displayed on the display unit 130.

The first image processing unit 120 may perform any type of image processing, without being limited to, for example, demultiplexing to separate a signal into characteristic signals, decoding which corresponds to an image format of an image signal, deinterlacing to convert an interlaced image signal into a progressive form, scaling to adjust an image signal to a preset resolution, noise reduction to improve image quality, detail enhancement, frame refresh rate conversion, or the like.

The first image processing unit 120 may be provided as an image processing board (not shown) in which a circuit system including various chip sets (not shown) to conduct such processes, a memory (not shown), electronic components (not shown) and wiring (not shown), is mounted on a printed circuit board (PCB, not shown).

The display unit 130 displays an image based on an image signal output from the first image processing unit 120. The display unit 130 may be configured in various display types using liquid crystals, plasma, light emitting diodes, organic light emitting diodes, a surface conduction electron emitter, a carbon nano-tube, nano-crystals, or the like, without being limited thereto.

The display unit 130 may further include an additional element depending on a display mode thereof. For example, in a display mode using liquid crystals, the display unit 130 may include a liquid crystal display (LCD) panel, a backlight unit (not shown) which provides light to the panel, and a panel drive board (not shown) which drives the panel.

The user input unit 140 transmits various preset control commands or unlimited information to the first controller 160 through user manipulation and input to a user input unit 140. The user input unit 140 may be provided as a menu key and an input panel may be installed on an outside of the display apparatus 100 or as a remote controller, separate from the display apparatus 100.

Alternatively, the user input unit 140 may be configured as a single body with the display unit 130. That is, in response to the display unit 130 is a touch screen, a user may transmit a preset command to the first controller 160 through an input menu (not shown) displayed on the display unit 130.

The first storage unit 150 stores unlimited data according to a control operation by the first controller 160. The first storage unit 150 is configured as a nonvolatile memory, such as a flash memory and a hard disk drive. The first storage unit 150 is accessed by the first controller 160, and the data stored in the first storage unit 150 may be read/recorded/revised/deleted/updated by the first controller 160.

The first storage unit 150 may store, for example, an operating system which runs the display apparatus 100 and various applications, image data and optional data which are executable in the operating system.

The first controller 160 performs control operations of various components of the display apparatus 100. For example, the first controller 160 conducts an image processing process of the first image processing unit 120, transmission and reception of signals/information/data through the first connection unit 110, and a control operation in response to a command from the user input unit 140, thereby controlling general operations of the display apparatus 100.

The display apparatus 100 having the foregoing configuration requires upgrading over time due to various factors, including technology development. Upgrading is necessary in various cases, for example, to receive an image signal in a new format which which was not available or was not recommended when the display apparatus 100 was first manufactured, in order to receive an image signal with a higher level than supported solely by the display apparatus 100 with a trend towards a demand for high-quality images, or to reduce system load of the display apparatus 100.

Upgrading the display apparatus 100 may be carried out in terms of hardware and software. In the exemplary embodiment, the upgrade apparatus 200 provided to upgrade the display apparatus 100 is connected to the first connection unit 110, thereby upgrading at least one of the existing hardware and software configurations of the display apparatus 100.

The upgrade apparatus 200 includes hardware/software configurations which correspond to at least part of the hardware/software resources of the display apparatus 100. These hardware/software configurations of the upgrade apparatus 200 are provided to perform improved functions than at least part of the resources of the display apparatus 100. When the upgrade apparatus 200 is connected to the display apparatus 100, the hardware/software configurations of the upgrade apparatus 200 replace at least part of the existing resources of the display apparatus 100, thereby ultimately improving quality of an image displayed on the display apparatus 100.

Hereinafter, the configuration of the upgrade apparatus 200 will be described.

The upgrade apparatus 200 includes a second connection unit 210 connected to the first connection unit 110 of the display apparatus 100, a second image processing unit 220 capable of performing processes which correspond to at least part of the image processing processes of the first image processing unit 120; a second storage unit 250 which stores unlimited data/information, and a second controller 260 controlling general operations of the upgrade apparatus 200.

The second connection unit 210 is connected to the first connection unit 110, thereby enabling communication between the upgrade apparatus 200 and the display apparatus 100. The second connection unit 210 may be provided according to a standard which corresponds to the first connection unit 110, so as to connect to the first connection unit 110 and be connected to at least one of the connection terminals (not shown) of the first connection unit 110.

For example, the second connection unit 210 may be connected to an HDMI terminal (not shown) for transmission and reception of image signals between the display apparatus 100 and the upgrade apparatus 200 or be connected to a USB terminal (not shown) for transmission and reception of data and power. However, the first connection unit 110 and the second connection unit 210 may be connected in various modes, without being limited to the above examples.

The second image processing unit 220 may perform a second process which corresponds to a first process, which is part of the processes performed by the first image processing unit 120 of the display apparatus 100. The terms "first process" and "second process" are named only for convenience in order to distinguish processes from each other and such processes may be carried out as a single unit process or as a plurality of unit processes. The second process is functionally improved as compared with the first process and is achieved by upgrading hardware, such as a chip set, or software, such as algorithms/executable codes/programs.

The second image processing unit 220 performs the second process, instead of the first process, according to a control operation by the first controller 160 or by the second controller 260 when the display apparatus 100 and the upgrade apparatus 200 are connected. In this manner, the second process, which is functionally improved compared to the first process, is implemented instead of the first process, thereby enhancing the image processing process overall, which will be described.

The second storage unit 250 stores unlimited data. The second storage unit 250 is configured as a nonvolatile memory, such as a flash memory and a hard disk drive. The second storage unit 250 is accessed by the first controller 160 or by the second controller 260, and the data stored in the second storage unit 250 is read/recorded/revised/deleted/updated by these controllers 160 or 260. The first storage unit 150 may also be accessed by not only the first controller 160 but also by the second controller 260, depending on a configuration thereof.

The second controller 260 controls connection between the display apparatus 100 and the upgrade apparatus 200 for performing a general image processing process. The second controller 260 and the first controller 160 may be configured as a CPU. Thus, in response to the second controller 260 performing an improved function compared to the first controller 160, the second controller 260 may disable or inactivate the first controller 160 and control general operations of the display system 1 in place of the first controller 160. Alternatively, the second controller 260 may control the general operations of the display system 1 together with the first controller 160.

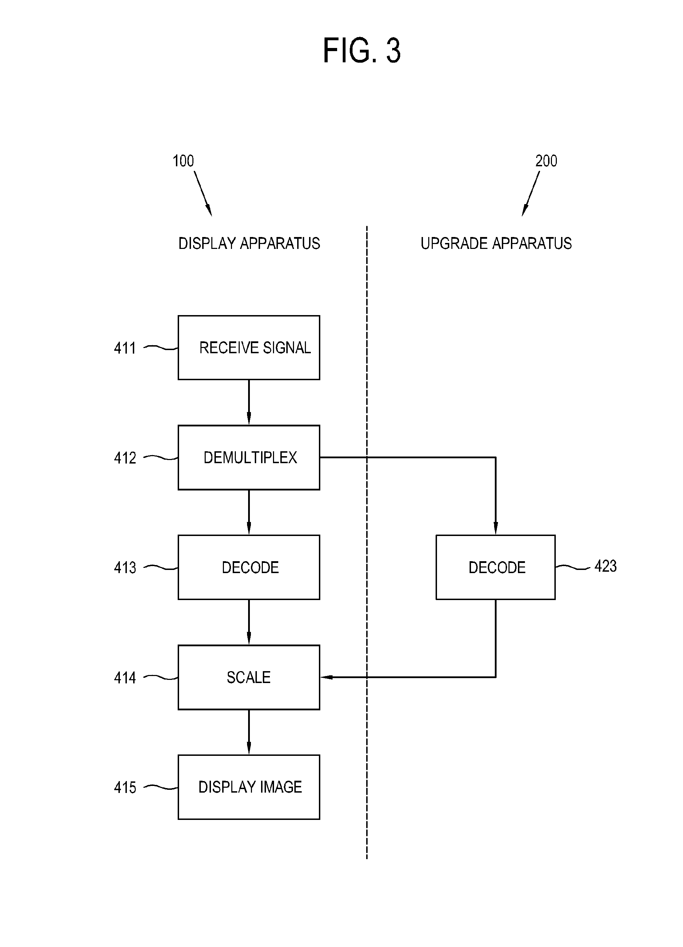

Hereinafter, a case where the display apparatus 100 is upgraded by the upgrade apparatus 200 will be described with reference to FIG. 3. FIG. 3 is a flowchart illustrating a method of the upgrade apparatus 200 which upgrades an image processing process of the display apparatus 100 in the display system 1, according to an exemplary embodiment.

As shown in FIG. 3, when receiving a signal, e.g., a broadcast signal, from the image source 300 (411), the display apparatus 100 processes the signal according to a preset sequence of image processing processes 412, 413 and 414. It should be noted that FIG. 3 illustrates only some image processing processes 412, 413 and 414 for concise description of the exemplary embodiment, not showing all image processing processes actually capable of being implemented by the display apparatus 100.

The display apparatus 100 performs demultiplexing to separate the received broadcast signal into an image signal, an audio signal, and optional data (412). The display apparatus 100 processes the respective demultiplexed signals, for example, decodes the image signal into a preset image format (413). The display apparatus 100 scales the decoded image signal to predetermined resolution so as to be displayed as an image on the display unit 130 (414) and displays an image based on the scaled image signal (415).

Among these processes, the upgrade apparatus 200 is provided to perform a process 423 which corresponds to the decoding process of the display apparatus 100. The decoding process 423 performed by the upgrade apparatus 200 is the same in terms of action as the decoding process performed by the display apparatus 100, but is functionally improved as compared with the decoding process 413 of the display apparatus 100. Thus, performing the decoding process 423 instead of the decoding process 413 improves the image processing process.

For example, the decoding process 423 can handle an image signal with high resolution or an image signal in a format which cannot be handled with the decoding process 413, or apply an additional effect to an image signal, which is not implementable with the decoding process 413.

Accordingly, in the sequence of the image processing processes according to an exemplary embodiment, the decoding process 423 of the upgrade apparatus 200 is carried out after demultiplexing 412, instead of the decoding process 413 of the display apparatus 100, according to control by the first controller 160 or the second controller 260. After the decoding process 423 of the upgrade apparatus 200, scaling (414) is carried out.

According to this sequence, transmission/reception of image signals and control signals is carried out between the display apparatus 100 and the upgrade apparatus 200, which is implemented according to a control operation by the first controller 160 or the second controller 260.

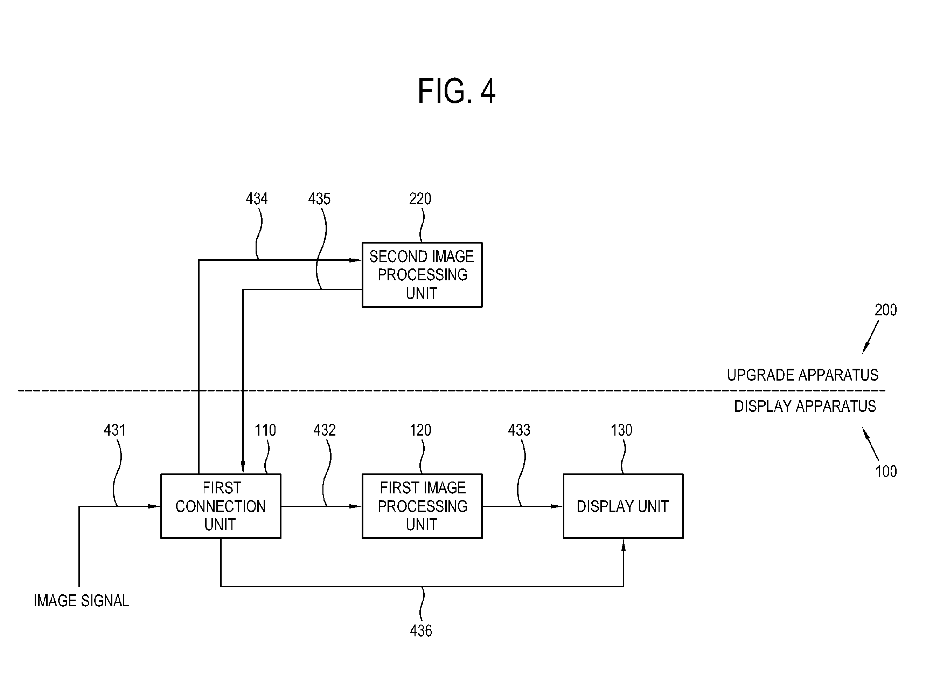

Unlike in FIG. 3 where part of the image processing processes is replaced, the second image processing unit 220 of the upgrade apparatus 200 may replace the first image processing unit 120 of the display apparatus 100, which will be described with reference to FIG. 4. FIG. 4 is a block diagram illustrating a process of transmitting a received image signal to the first connection unit 110 in the display system 1, according to an exemplary embodiment.

As shown in FIG. 4, when the upgrade apparatus 200 is not connected to the display apparatus 100, an image signal is received by the first connection unit (431) and then transmitted to the first image processing unit (432). The first image processing unit 120 processes the image signal and outputs the processed signal to the display unit (433), and accordingly, the display unit 130 displays an image based on the image signal processed by the first image processing unit 120.

Meanwhile, when the upgrade apparatus 200 is connected to the display apparatus 100, an image signal is received by the first connection unit (431) and then transmitted to the second image processing unit 220, not to the first image processing unit (434). The second image processing unit 220 performs an image processing process on the image signal instead of the first image processing unit 120, and the image signal processed by the second image processing unit 220 is transmitted (435) back to the display apparatus 100.

The image signal is transmitted to the display unit 130, bypassing the first image processing unit (436), and accordingly, the display unit 130 displays an image based on the image signal processed by the second image processing unit 220. Alternatively, although the image signal is transmitted to the first image processing unit 120 from the first connection unit 110, the first image processing unit 120 does not process the image signal but transmits the image signal to the display unit 130.

Meanwhile, when the display apparatus 100 and the upgrade apparatus 200 are connected, the second controller 260 may disable the first controller 160 and control the first image processing unit 120 and the second image processing unit 220. Alternatively, when the operating system stored in the second storage unit 250 is a upgraded version compared to the operating system stored in the first storage unit 150, the operating system of the first storage unit 150 may be updated to the operating system of the second storage unit in order to 250 to run the updated operating system, or the operating system of the second storage unit 250 may be run instead of the operating system of the first storage unit 150.

With this configuration, the upgrade apparatus 200 according to an exemplary embodiment may upgrade the display apparatus 100.

In the sequence of the image processing processes, e.g., decoding an image signal/image data into a preset image format; scaling the decoded image signal to a predetermined resolution to be displayed as an image on the display unit 130, and outputting the scaled image signal to the display unit 130, the first controller 160 may adjust the image quality with respect to the scaled image signal.

Adjusting the quality of the image displayed on the display unit 130 may be performed by image quality adjustment software stored in the first storage unit 150 or stored in the second storage unit 250. The image quality adjustment software displays a menu image on the display unit 130 in an OSD mode, the menu image being provided for a user to optimally adjust the quality of a displayed image.

In this case, it may be difficult for the user to adjust the quality of the image using the menu image. When the display unit 130 is configured as an LCD panel, it may be even harder for the user to adjust the quality in order to compensate for or correct image quality deterioration resulting from a decrease in efficiency of a light source or a backlight over operating time of the panel.

Thus, in the exemplary embodiment, to compensate for deterioration in image quality that occurs with the passing of operating time of the display unit 130, i.e., by temporal change of the panel, a set value of each item of the menu image for image quality adjustment is changed and displayed while updating the image quality adjustment software, based on usage time of the display unit 130.

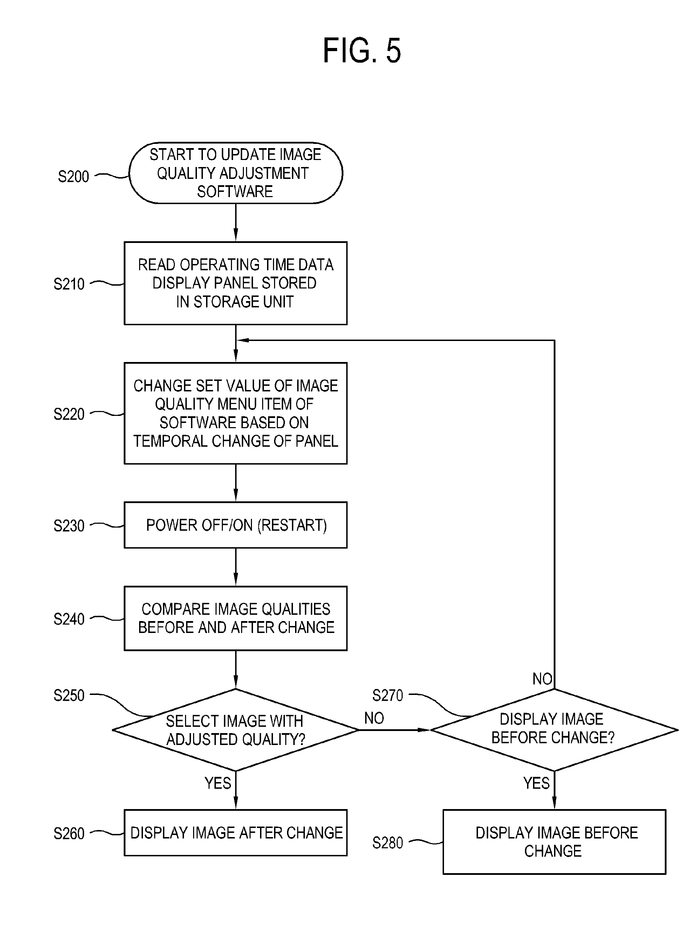

FIG. 5 is a flowchart illustrating a process of updating image quality adjustment software of the display apparatus 100, according to an exemplary embodiment.

As shown in FIG. 5, when updating the quality of an image, adjustment software is started (S200), operating time information/data on the display unit 130 stored in the first storage unit 150 is read (S210). The operating time information on the display unit 130 may be obtained by the first controller 160 which measures operating time for which the display unit 130 operates and the operating time information is stored in the first storage unit 150.

After reading the operating time information on the display unit 130, set values of image quality adjustment items of the menu image for image quality adjustment may be manually changed by the user through a setting window, or may collectively be automatically changed by a software update. The set values of the menu items are changed in accordance with a predetermined standard or a standard intuitionally set by a set values setter (S220). Here, the set values items include at least one of brightness, noise, sharpness, a gray scale of a low grayscale area, contrast, color, gamma, and white color temperature.

The predetermined standard may be defined as follows. The operating time information on the display unit 130 represents time use of the panel. With passing of the panel use time, a decrease in brightness is basically the most remarkable result. Regarding such decrease in brightness, statistical data regarding some extent of a decrease in brightness may be collected through investigation of a plurality of samples. For example, when the brightness decreases in a plurality of panels having an operating time of 10,000 hours are in a range of 5 to 10 %, the brightness increases by an intermediate value of 7.5 %, thereby addressing the brightness decrease. When brightness is raised by 7.5%, optimal correction values of other factors, i.e., noise, sharpness, a gray scale of a low grayscale area, contrast, color, gamma, and white color temperature, may be determined based on a table (not shown) or may be empirically or experimentally obtained.

When the set values of the respective items are changed, rebooting or restarting is carried out to apply the changes to the display apparatus (S230). When the display apparatus 100 is rebooted, a comparison image is displayed for comparison of image qualities before and after the change in the set values (S240), enabling a user to determine whether to select an image with adjusted quality through the comparison image (S250).

When image quality after the change of the set values is selected, an image with adjusted quality is displayed (S260). When the image quality after the change is not selected, the user may determine whether to select the image quality before the change or to change the set values again (S270). That is, when the user selects to terminate a setting, an image with the image quality before the change is displayed. If the user selects to change the set values again, a setting window for setting the set values of the items of the menu image for image quality adjustment is displayed again in order to repeat a process of changing the set values.

In this manner, the image quality adjustment software, in consideration of the temporal change of the display unit 130, may result in an image with optimal display quality.

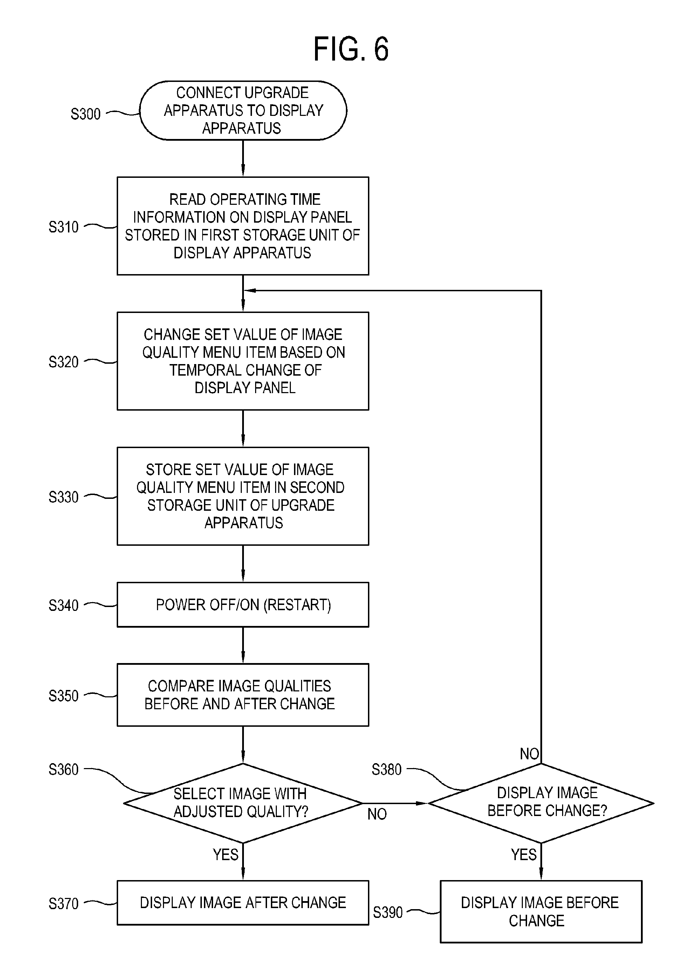

Hereinafter, a process of the upgrade apparatus 200 which upgrades the display apparatus 100 will be described with reference to FIG. 6. FIG. 6 is a flowchart illustrating the process of using the upgrade apparatus to upgrade the display apparatus.

As shown in FIG. 6, when the upgrade apparatus 200 is connected to the display apparatus 100 (S300), the second controller 260 of the upgrade apparatus 200 requests operating time information from the display unit 130 of the display apparatus 100 through the first connection unit 110 and the second connection unit 210. The first controller 160 of the display apparatus 100 provides to the upgrade apparatus 200 the operating time information on the display unit 130 which is stored in the first storage unit 150.

When receiving the operating time information on the display unit 130 (S31 0), the upgrade apparatus 200 may change a set value of an item of an image quality menu for manual image quality adjustment through a setting window or may be collectively automatically changed through a software update. The set value of the item of the image quality menu is changed based on a predetermined standard or by a standard intuitionally set by a set value setter (S320). Each item and the setting standard have been described above with reference to FIG. 5, and thus descriptions thereof are omitted herein.

When the set value of the item of the image quality menu is changed, the changed set value is stored in the second storage unit 250 of the upgrade apparatus 200 (S330). The set value may also be stored in the first storage unit 150 of the display apparatus 100.

To apply the changed set value to the display apparatus 100, rebooting is carried out (S340). After the display apparatus 100 is rebooted, a comparison is made to compare image qualities before and after the change (S350), and a user determines whether to select an image with the adjusted quality (S360).

When the image quality is selected after the change, an image with the adjusted quality is displayed (S370). When the image quality after the change is not selected, a determination is made as to whether to select the image quality before the change or to change the set value again (S380). That is, in response to a termination of setting is selected, an image with the image quality before the change is displayed (S390). In response to the set value being changed again, the value of each item of the menu image for the image quality adjustment is displayed for setting, thereby changing the set value again.

In this manner, when the display apparatus 100 is upgraded through the upgrade apparatus 200, a temporal change of the display unit 130 of the display apparatus which was previously used is reflected, thereby resulting in improved image quality.

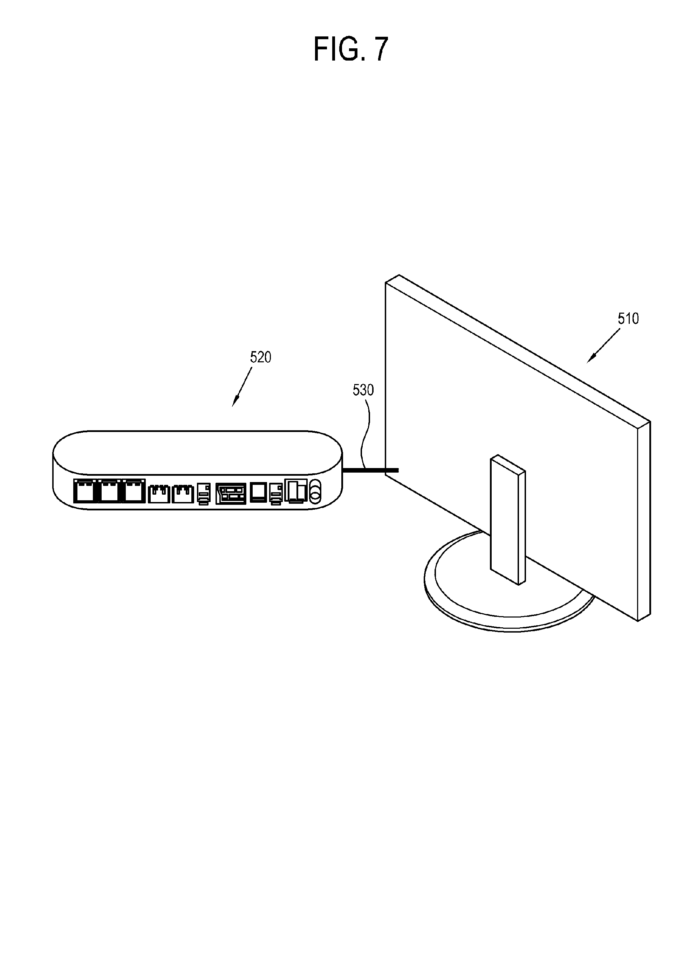

The ideas and concepts described above may be applied to a display apparatus having a different configuration from the foregoing display apparatus. FIG. 7 is a display apparatus according to a second exemplary embodiment.

As shown in FIG. 7, the display apparatus according to an exemplary embodiment includes a display module 510 which includes a display unit (not shown); a signal processing module 520 installed separately from the display module 510 and which processes an image signal to be displayed on the display unit, and a connection unit 530 which connects the signal processing module 520 and the display module 510 to enable signal transmission and reception between the signal processing module 520 and the display module 510.

The display module 510 includes the display unit displaying an image and a speaker (not shown) which outputs a sound and outputs an image and a sound based on a signal output from the signal processing module 520.

The signal processing module 520 is connected to the display module 510 and processes image and audio signals input from the outside according to preset image processing processes. The image processing processes may be the same as described above in the first embodiment, and thus descriptions thereof are omitted herein.

The connection unit 530 is a communication cable which transmits to the display module 510 an image/audio signal processed by the signal processing module 520 , and is detachable from the signal processing module 520 and/or the display module 510.

In the display apparatus according to an exemplary embodiment, the display module 510 which displays an image and the signal processing module 520 which processes an image signal are separated as independent components. Thus, in the display apparatus, when the display module 510 is replaced by a display module having a panel with a larger effective screen or a full high-resolution panel, the same signal processing module 520 may be used. Alternatively, the same display module 510 may be used and the signal processing module 520 may be -upgraded or replaced by a new one.

The signal processing module 520 may include a connector/terminal for physical/electrical connection to the outside. Further, the signal processing module 520 may be wirelessly connected to the display module 510.

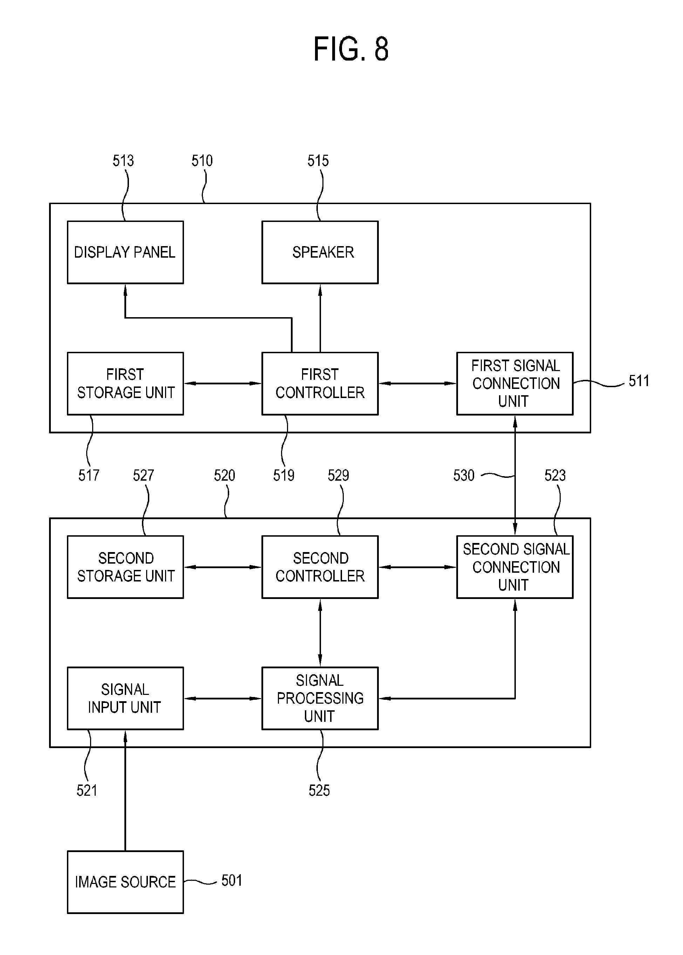

Hereinafter, configurations of the display module 510 and the signal processing module 520 will be described with reference to FIG. 8. FIG. 8 is a diagram illustrating the configurations of the display module 510 and the signal processing module 520.

As shown in FIG. 8, the display module 510 includes a first signal connection unit 511 to which the signal processing module 520 is connected, a display panel 513 which displays an image, a speaker 515 which outputs a sound, a first storage unit 517, and a first controller 519.

The first signal connection unit 511 may receive signals/data in accordance with HDMI, USB, or component standards and includes at least one of a plurality of connection terminals (not shown) whih correspond to respective standards, e.g., a USB terminal, an HDMI terminal, an LAN terminal, an SCART terminal, an RS232 terminal, an OPTICAL terminal, and an RF reception unit.

The display panel 513 displays an image based on an image signal output from the signal processing module 520. The display panel 513 may be configured in various display types using liquid crystals, plasma, light emitting diodes, organic light emitting diodes, a surface conduction electron emitter, a carbon nano-tube, nano-crystals, or the like, without being limited thereto.

The display panel 513 may further include an additional element depending on a selected display mode. For example, in a display mode using liquid crystals, the display panel 513 may include a backlight unit (not shown) which provides light to the panel and a panel drive board (not shown) which drives the panel.

The speaker 515 outputs a sound based on an audio signal processed by the signal processing module 520.

The first storage unit 517 may back up various data of the signal processing module 520 before the signal processing module 520 is replaced. The first controller 519 controls transmission and reception of signals/information/data through the first signal connection unit 511 and through a second signal connection unit 523; access to the first storage unit 517 to read/record/revise/delete/update data, and connection between the display module 510 and the signal processing module 520.

Hereinafter, the configuration of the signal processing module 520 will be described.

The signal processing module 520 includes a signal input unit 521 which inputs an image signal to be processed by a signal processing unit 525; the second signal connection unit 523 which is connected to the display module 510; the signal processing unit 525 which processes a signal input from an image source 501; a second storage unit 527 which stores unlimited data/information, and a second controller 529 which controls general operations of the signal processing module 520.

The second signal connection unit 523 is connected to the first signal connection unit 511, thereby enabling communication between the signal processing module 520 and the display module 510. The second signal connection unit 523 is provided according to a standard which corresponds to the first signal connection unit 511 to be connected to the first signal connection unit 511 and is connected to at least one of the plurality of connection terminals of the first signal connection unit 511.

The signal processing unit 525 may perform various preset signal processing processes on an image signal received from the signal input unit 521. The signal processing unit 525 outputs the processed image signal to the display panel 513 through the first signal connection unit 511 and the second signal connection unit 523, so that an image based on the image signal is displayed on the display panel 513.

The second storage unit 527 stores unlimited data. The second storage unit 527 is configured as a nonvolatile memory, such as a flash memory and/or a hard disk drive. The second storage unit 527 is accessed by the second controller 529, and the data stored in the second storage unit 527 may be read/recorded/revised/deleted/updated by the second controller 529.

The second controller 529 may be configured as a CPU and performs control operations on various components of the signal processing module 520. For example, the second controller 529 controls a signal processing process through the signal processing unit 525; transmission and reception of signals/information/data through the first signal connection unit 511 and the second signal connection unit 523; access to the second storage unit 527 to read/record/revise/delete/update data, and connection between the display module 510 and the signal processing module 520.

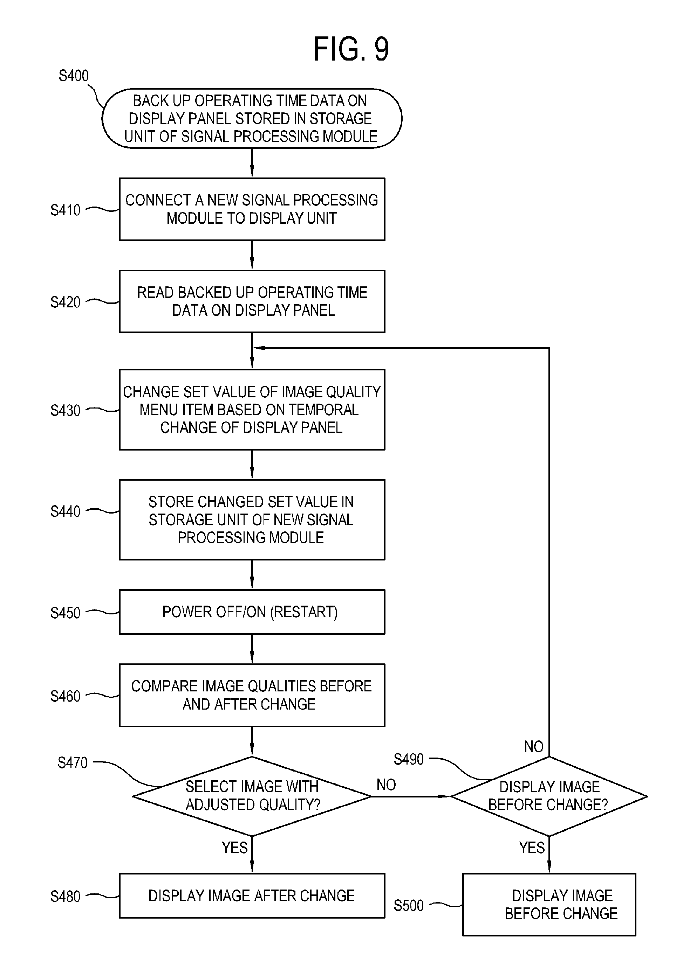

FIG. 9 is a flowchart illustrating a process of upgrading or replacing the signal processing module 520 of the display apparatus of FIG. 8.

As shown in FIG. 9, operating time data on the display panel 513 stored in the signal processing module 520 is backed up before upgrading or replacement the signal processing module 520 (S400). Here, a backup may be stored in the display module 510;a separate external storage device, or a storage means, such as a server using a communication tool.

When a new signal processing module 520 is connected to the display module 510 (S410) as a substitute module, the signal processing module 520 reads the backed up operating time data on the display panel 513 (S420).

When the operating time data on the display panel 513 is found (S420), a value of an item of an image quality menu for image quality adjustment is manually changed through a setting window or may be collectively changed in an automatic fashion by overwriting. The set value of the item of the image quality menu is changed based on a predetermined standard or a standard intuitionally set by a value setting setter (S430).

When the set value of the item of the image quality menu is changed, the changed set value is stored in the signal processing module 520 (S440).

To apply the changed set value to the display apparatus, rebooting is carried out (S450). After the display apparatus is rebooted, a comparison is carried out between image qualities before and after the change of the set value (S460), and a determination is made as to whether to substitute an image with an image having adjusted quality (S470). After the image quality change is selected, an image with an adjusted quality is displayed (S480). When the image quality is not selected after the change, a determination is made s to whether to select to image quality before the change or to change the set value again (S490). That is, in response to a termination of setting being selected, an image with the image quality before the change is displayed (S500). In response to the set value being changed again, the setting window is displayed again in order to change the value of the item of the image quality menu for which the image quality adjustment is displayed for setting, thereby changing the set value again.

In this manner, when the signal processing module 520 of the display apparatus is upgraded or replaced, a temporal change of the display panel 513 of the display apparatus previously used is reflected, thereby resulting in improved image quality.

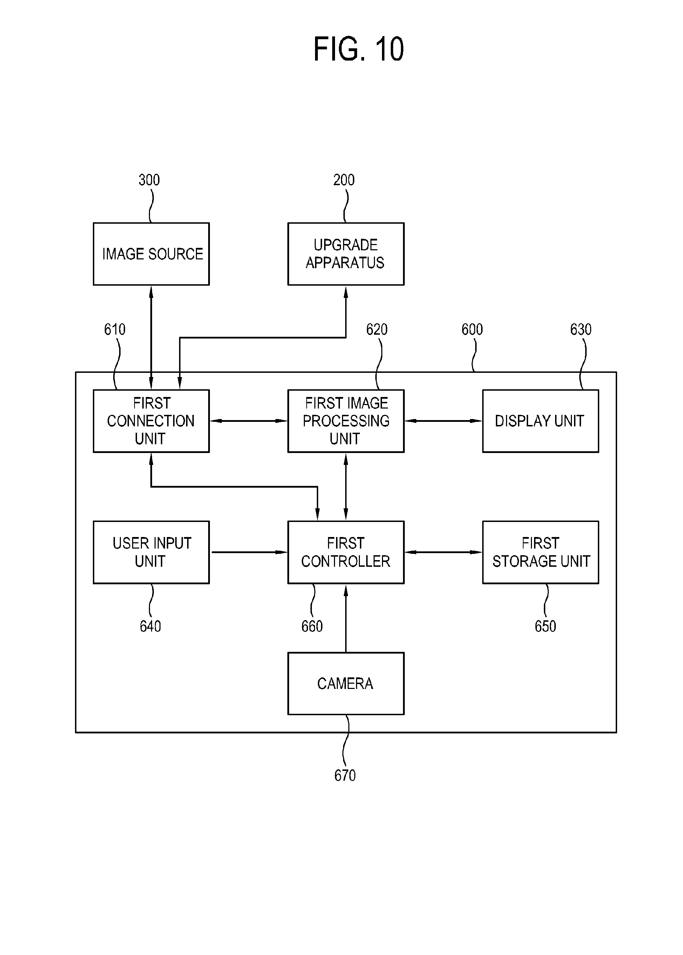

Hereinafter, a third exemplary embodiment will be described with reference to FIG. 10. FIG. 10 illustrates a configuration of a display apparatus 600 according to the third exemplary embodiment.

As shown in FIG. 10, as an upgrade apparatus 200 is connected to the display apparatus 600, the display apparatus 600 according to an exemplary embodiment is upgraded by the upgrade apparatus 200 and an image signal received from an image source 300 using an upgraded image processing process is processed.

The display apparatus 600 includes a first connection unit 610, a first image processing unit 620, a display unit 630, a user input unit 640, a first storage unit 650, and a first controller 660. These components of the display apparatus 600 and the upgrade apparatus 200 are substantially the same as those described above with reference to FIG. 2, and thus descriptions thereof are omitted herein.

The display apparatus 600 according to an exemplary embodiment includes a camera 670 which captures environments or surroundings of the display apparatus 600 as images.

The camera 670 captures a moving image/still image, and an image captured by the camera 670 is used variously, e.g., being displayed on the display unit 630; stored in the first storage unit 650, or transmitted to the outside through the first connection unit 610. For example, a user's face captured by the camera 670 is recognized and used to automatically set up a user's favorite channel.

The camera 670 may capture the surroundings including a user, i.e., viewing environments. The image captured by the camera 670 is transmitted to the upgrade apparatus 200, and the upgrade apparatus 200 analyzes the captured image of the surroundings. The display apparatus 600 may adjust the image processing process to optimize the viewing environments, i.e., the display apparatus may perform image quality adjustment of the displayed image, based on information obtained through analysis by the upgrade apparatus 200.

The first controller 660 may control the camera 670 in order to capture an image based on a selection of the user input through the user input unit 640. The captured image is an image obtained by capturing a user watching an image displayed on the display apparatus 600 as well as surroundings of the display apparatus 600 including the user. The first controller 660 transmits the captured image to the upgrade apparatus 200 connected through the first connection unit 610.

The first controller 660 may also receive analysis information on the surroundings through the first connection unit 610, the analysis information being obtained by the upgrade apparatus 200 processing and analyzing the captured image from the display apparatus 600. For example, the first controller 660 may receive information on a RGB ratio, a histogram, or brightness of the image capturing the surroundings, including the user.

The first controller 660 may adjust image quality, such as brightness, light and shade, color density, definition, or color level, based on the analysis information on the image capturing the surroundings of the display apparatus 600. For example, when ambient light around the user is considered relatively bright, the first controller 660 controls an increase in the brightness of an image displayed on the display unit 630. To the contrary, when ambient light around the user is considered relatively dark, the first controller 660 controls a decrease in brightness of an image displayed on the display unit 630. The first controller 660 may store the analysis information in the first storage unit 650.

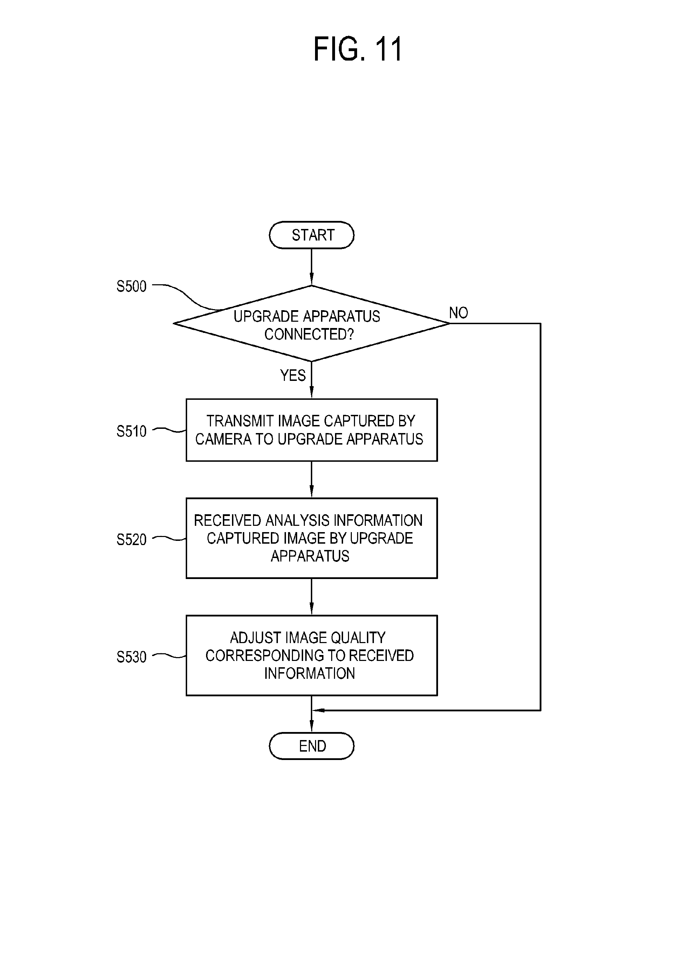

Hereinafter, a control method of the display apparatus 600 according to an exemplary embodiment will be described with reference to FIG. 11. FIG. 11 is a flowchart illustrating the method of controlling the display apparatus 600.

As shown in FIG. 11, the display apparatus 600 identifies whether the upgrade apparatus 200 is connected to the display apparatus 600 (S500). When the upgrade apparatus 200 is identified as being connected to the display apparatus 600, the display apparatus 600 transmits an image captured by the camera 670 to the upgrade apparatus 200 (S510).

The display apparatus 600 receives analysis information on the captured image from the upgrade apparatus 200 (S520). The display apparatus 600 performs image quality adjustment on the image based on the analysis information regarding surroundings of the display apparatus 600 (S530).

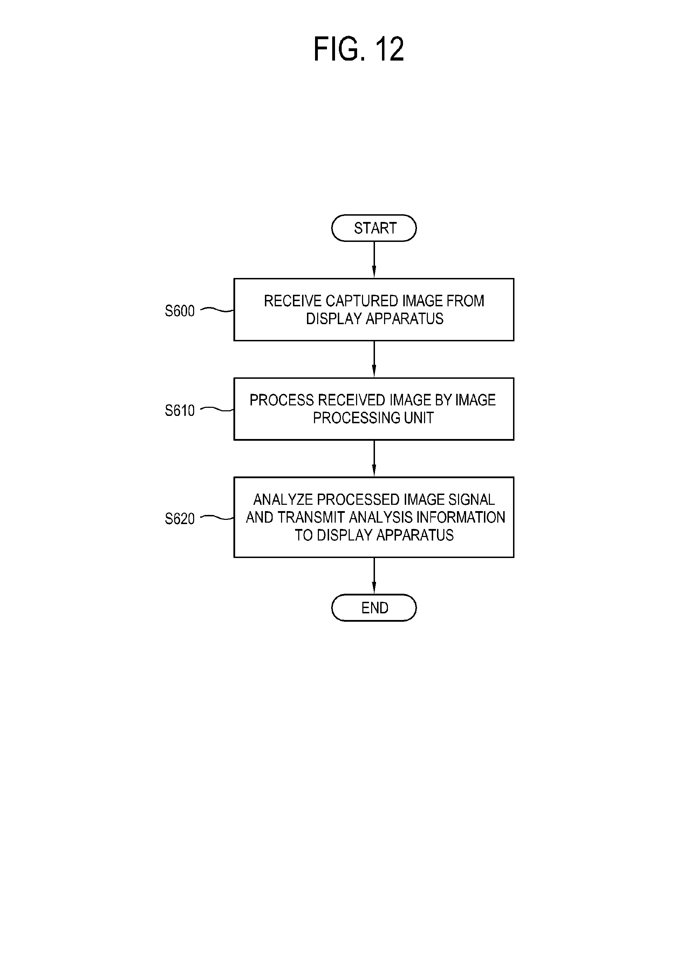

Hereinafter, a method of controlling the upgrade apparatus 200 according to an exemplary embodiment will be described with reference to FIG. 12. FIG. 12 is a flowchart illustrating the method of controlling the upgrade apparatus 200.

As shown in FIG. 12, the upgrade apparatus 200 receives an image captured by the camera 670 which corresponds to a control operation by the display apparatus 600 (S600).

The upgrade apparatus 200 processes the received image according to a preset process (S610). The upgrade apparatus 200 analyzes surroundings of the display apparatus 600 based on the processed image and transmits analysis information to the display apparatus 600 (S620). Here, the analysis information may include at least one of a RGB ratio, a histogram, or brightness of the captured image.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

## Claims

1. A display apparatus comprising:
a display unit;
an image processing unit processing an image signal received from an image source according to a preset image processing process to display an image on the display unit;
a connection unit to which an upgrade apparatus is connected to upgrade the image processing process;
a storage unit storing operating time information on the display unit; and
a controller displaying a menu image on the display unit, the menu image being provided to adjust at least one preset item associated with quality of the image displayed on the display unit, and transmitting the operating time information on the display unit to the upgrade apparatus so as to change a set value of the item of the menu image corresponding to the operating time information on the display unit stored in the storage unit in upgrading by the upgrade apparatus.

2. The display apparatus of claim 1, wherein the display unit comprises a liquid crystal display (LCD) panel and the operating time information on the display unit comprises information on use time of the panel.

3. The display apparatus of claim 2, wherein the controller updates the operating time information on the display unit stored in the storage unit with the passing of the usage time of the panel.

4. The display apparatus of claim 1, wherein the controller controls the display unit to display a comparison image to compare quality of an image before change of the set value of the item and the quality of an image after change of the set value of the item.

5. The display apparatus of claim 4, wherein the controller determines whether to change the set value of the item based on a selection input through the comparison image.

6. The display apparatus of claim 1, wherein the item of the menu image comprises at least one of brightness, noise, sharpness, a gray scale of a low grayscale area, contrast, color, gamma, and white color temperature.

7. The display apparatus of claim 1, further comprising a camera capturing surroundings of the display apparatus,
wherein the controller transmitting an image captured by the camera to the upgrade apparatus so that the upgrade apparatus analyzes the surroundings of the display apparatus based on the captured image and controlling the image processing process to be adjusted based on analysis information on the surroundings of the display apparatus received from the upgrade apparatus.

8. The display apparatus of claim 7, wherein the analysis information comprises at least one of a RGB ratio, a histogram, and brightness of the captured image.

9. The display apparatus of claim 7, wherein the adjustment of the image processing process comprises adjustment of at least one of brightness, light and shade, color density, definition, and a color level of the image displayed on the display unit.

10. The display apparatus of claim 7, wherein when ambient light of the surroundings is determined relatively bright from the analysis information, the controller controls brightness of the image displayed on the display unit to increase brightness.

11. An upgrade apparatus of a display apparatus comprising:
a connection unit connected to the display apparatus processing an image signal received from an image source according to a preset image processing process to display an image;
an image processing unit processing the image signal with the upgraded image processing process when the display apparatus is connected to the connection unit; and
a controller displaying a menu image on the display apparatus when upgrading the display apparatus connected to the connection unit, the menu image being provided to adjust at least one preset item associated with quality of the image displayed on a display unit of the display apparatus, and changing and displaying a set value of the item of the menu image corresponding to operating time information on the display unit when the operating time information on the display unit is received from the display apparatus.

12. The upgrade apparatus of claim 11, wherein the display unit comprises a liquid crystal display (LCD) panel and the operating time information on the display unit comprises information on use time of the panel.

13. The upgrade apparatus of claim 11, wherein the controller controls the display apparatus to display a comparison image to compare quality of an image before change of the set value of the item and quality of an image after change of the set value of the item.

14. The upgrade apparatus of claim 13, wherein the controller determines whether to change the set value of the item based on a selection input through the comparison image.

15. The upgrade apparatus of claim 11, wherein the item of the menu image comprises at least one of brightness, noise, sharpness, a gray scale of a low grayscale area, contrast, color, gamma, and white color temperature.
